# EUROPEAN PATENT SPECIFICATION

(11) **EP 0 350 158 B1**
(45) Date of publication and mention of the grant of the patent: **25.08.1993**
(21) Application number: 89305474.2
(22) Date of filing: 31.05.1989
(51) Int. Cl.: G01D 5/34, G01D 5/36

(54) **Position sensing device**
Positionsmessvorrichtung
Dispositif de mesure de positions

(30) Priority: 08.07.1988 US 217015
(43) Date of publication of application: 10.01.1990
(73) Proprietor: PARKER HANNIFIN CORPORATION, Cleveland Ohio 44112 (US)
(72) Inventor: Hassler, William L., Jr., El Toro California 92630 (US)
(74) Representative: Purvis, William Michael Cameron

(56) References cited:
- FR-A- 2 310 549
- US-A- 3 648 276
- PATENT ABSTRACTS OF JAPAN vol. 7, no. 270 (P-240)(1415) 02 December 1983, & JP-A-58 150804 (KEIHIN DENSOKUKI K.K.) 07 September 1983,

## Description

This invention relates in general to position sensing devices such as devices which indicate the relative position of two elements, one of which is movable with respect to the other.

In many areas of industry and manufacturing it is important accurately to position one element or device with respect to another. For example, in machining on a lathe with a movable table it is important that the table carrying the tool bit can be accurately positioned with respect to a bed holding a chuck and work piece. To allow this positioning to be performed a position sensor can be used. In addition to accurate relative positioning, it is also often necessary to move the table and tool bit to and from or between very accurate relative positions with respect to the bed.

For example, it might be desirable to perform a first machining operation on the work piece with the tool bit at one relative position and then automatically move the tool bit (by moving the table on the bed) to a second position and perform a second machining operation on the work piece. Frequently it may be desirable to have great accuracy in the machined work resulting from the first and second position machining operations. A position sensor connected to the table drive can be used for automatic performance of such multiple stops. Still further, it is often desirable to change the positions at which stops or operations are performed and this requires that new position locations be established with accuracy. An electron position sensor can allow the machine to be electronically reset to new stops.

Of course, it is desirable to provide simpler and less expensive methods and devices for performing these sensing operations more quickly and more accurately. This is especially true in fields such as integrated circuit manufacture where extremely accurate positioning is required.

Among the devices which desirably use such relative position sensing methods and devices are lathes, milling machines, microscopes, telescopes, industrial robots, cylinders, flight controls, drill presses and production automation equipment.

Among the devices currently available for relative position sensing are electronic relative position sensors which have scales provided on them and means for electrically reading these scales. The scale can be attached to the movable table carrying the tool bit or the like and the electrical reader of the scale can be connected to the lathe bed or the like, or vice versa. As the device moves, the reader electrically senses or determines the relative position between the scale and reader and, thereby, the relative position between the tool bit table and lathe bed and the devices to which they are attached.

In general, electronic relative position sensing devices fall into two major categories. The first category is best characterised as a serial device or counter. These device are only capable of determining the distance between two stops by counting or otherwise electrically measuring the distance between the two stops. Because the counter has no means of sensing where on the scale it is because it can only measure by counting, this device measures only relative positions. The second kind of device is best characterised as an absolute position sensing device. In these devices, where on the scale --an absolute position-- is able to be determined, this allows relative positions to also be determined. In other words, a position on the scale, such as 76.2 mm (3 inches) from the zero point of the scale, is readable directly from absolute position indicia on the scale at that position.

In the past serial devices or counters have been most successful because of greater accuracy and lower cost. Among these devices are rotary counters which have a wheel, gear or screw which turns as a result of the motion and an electronic counter which counts rotations or parts of rotations of the wheel or screw. Similarly, there are devices which have magnetic marks or slits or other indicia on a bar and provide an electronic means for counting the passage of each one of these indicia. In both of these devices the accuracy of the location of the machine-read indicia on the scale determines the accuracy of the device. Thus, the best accuracy of these devices is approximately 0.0005 mm (20 microinches, 0.00002 inches).

A good example of the most accurate of the serial or incremental position sensing devices are Heidenhain electronic measuring scales made by Heidenhain Corporation. These devices have glass scales with extremely accurate etched markings positioned thereon which can be electronically counted by a movable reader. Accurately to etch the markings requires a laboratory secured deep underground with local trains prevented from running to avoid distant earth vibrations. Isolation tables, unique machine tools and unique measuring equipment are required to perform the etched marking. Of course, the scales produced in this way so as to provide 0.0005 mm (20 microinch) accuracy are very expensive.

Position sensing rotary devices, like linear counters, count increments to determine position. Rotary devices, however, count turns or portions of turns of a position wheel. A problem with these devices is that they lose accuracy if there is any slippage between the position wheel and the device causing the rotation and gears do not move entirely smoothly as they rotate. Both the linear and the rotary counters are unable to determine where on the scale the device is if the power is turned off or is otherwise interrupted so that it loses its place.

Absolute position devices avoid the problem of losing their place by having place determining markings thereon. A good example of such a device is shown in Patent Specification US-A-4,074,258 to Dore, et al. This device includes a graduated scale which carries marks which are transparent on an opaque background or opaque on a transparent background whereby the marks can be interpreted by a photo-electric reader. A first set of identical marks are distributed at equal intervals along the scale, for example, at 25.4 mm (one inch) intervals. These marks are precisely located because the location of each mark is used as a reference for interpolation. In this regard, the scale is like a serial positioning device.

However, adjacent the accurately positioned and spaced interpolation marks are a group of identifying marks (typically a binary number representation) which can be electrically determined as uniquely identifying the adjacent precisely located interpolation mark. The interpolation marks are distinguished from the identification marks by the intensity of light, by the width of the marks or by other means. In this way the electrical interpretation of the identifying marks can be made allowing the particular location of the interpolation mark to be identified. Then a characteristic such as the leading edge of the interpolation mark is used to provide a relative distance along the reader.

In one embodiment, the Dore patent describes distinguishing between interpolation marks and identifying marks by the width of the marks as read by light on a charge-coupled device. An interpolation mark is five pixels wide and an identifying mark is ten pixels wide. Specifically, a first pixel of a five pixel interpolation mark, identified by the binary code of 10 pixel identifying marks adjacent thereto, is read from the pixels of a charge-coupled device reader as the relative position of the CCD reader with respect to the scale.

Of course, a problem with this device is that the identifying marks cause the position or interpolation marks to be farther apart. This means the accuracy of the device is reduced because less magnification (the means by which the marks are more finely interpreted) is possible.

Other similar absolute position devices utilise marks of identification located transversely to the interpolation marks or position marks. The difference in position allows these marks to be separately read so as to distinguish them without differences in width or intensity. With these devices, however, a separate reader or readers is required for the identifying marks.

In general, absolute and relative devices suffer by not being sufficiently accurate. Like relative devices, the precision of an absolute device depends upon the precision with which the interpolation or position marks are placed on a scale. Very accurate painting, grinding, cutting or etching is required and the limits of this marking sets the limit for the accuracy of the device. Of course, the most accurate of these devices are very expensive because of the extreme manufacturing techniques required.

Another problem with the absolute positioning devices is that the means for reading the identifying marks are complicated, slow, and inaccurate. Thus, an electronic means must be provided to distinguish the interpolation marks from the identifying marks, the identifying marks must then be converted to a form which can be read and then the binary number or the like must be associated with the proper interpolation or positioning mark.

The position of the identifying mark is made using only a single characteristic of the mark such as the leading edge (first pixel of five pixel mark, for example). This leading edge is identified by the pixel of a CCD having an output signal of a predetermined strength. Variations in light source strength, electronic noise, dirt on the magnifying lens, and many other disturbing factors can prevent proper interpretation of the identifying mark position characteristic from being read or from being read accurately.

Another problem with all of these devices is that the precision of the device can be reduced or destroyed by a mounting which stresses or moves the marks with respect to each other. Still further, thermal changes cause the marks to move with respect to each other also changing the accuracy of the scale. Usually, however, the scale is not sufficiently accurate to be affected by thermal expansion. Even further, the devices for shining light through lenses or the like have not been satisfactory enough to provide accurate reading.

Japanese Patent Abstract JP-A-58-150 804 discloses a position sensing device wherein a light source illuminates a scale plate and an image of the pattern thereof is projected onto an image sensor such as a CCD, the output of which is processed by a position calculation circuit.

Patent Specification US-A-3 648 276 discloses apparatus for determining the position of a component relative to a reference position on another component utilising a scale assembly with a plurality of identical scale segments which is compared with a coarse scale to give a unique representation for each of the identical scale segments to a reading assembly.

According to one aspect of the invention there is provided a precision electronic absolute position device comprising
a scale disposed along a position line defined by a set of position segments;
the scale having machine readable indicia fixed thereon along the position line such that at least two of the indicia are disposed in each of the segments and the arrangement of the indicia is such that the position relationship between the at least two indicia in each of the segments is unique to define that segment and the combination of the line positions of the at least two indicia defines a precise position along the position line within that segment;
a machine reading means movable with respect to the scale along the position line such that the reading means is able to scan for reading the at least two indicia of at least one segment, for reading and converting to electrical signals the at least two indicia in the at least one segment of the scale such that the electrical signals indicate the line position relationship between the at least two indicia, the combination of the line positions of the at least two indicia and the relative line position of the machine reading means with respect to the indicia;
electronic memory means to retain and electronically communicate for each segment a segment indication corresponding to the line position relationship between the at least two indicia of each segment, and an indication of precise position along the position line corresponding to the segment indication and the combination of line positions of the at least two indicia of said segment; and
position determining means to receive the electronic signals from the reading means, interpret the signals using the memory means, and determine therefrom the absolute position along the position line of the reading means with respect to the scale.

According to another aspect of the invention there is provided a method of deriving position information from a position indicating slit in a scale bar, comprising:
directing light through the slit onto a multiple pixel charge-coupled device such that more than one of the pixels is illuminated; the illuminated pixels of the charge-coupled device producing electrical signals proportional to the intensity of the illumination; and
using at least two of the produced electrical signals to form a position information composite of at least two elements.

Such a relative position sensing device and method can be more accurate in measuring, can be of simple construction and need not require extremely accurate positioning of indicia on a scale while still producing extremely accurate measurements.

The method of positioning and a positioning device can use simple and reliable electronics, allow absolute relative positioning (do not lose position on scale) and can produce precision measurement even if the scale is distorted for example by impact or by thermal expansion.

The method and device can read indicia on a scale so that a more accurate determination and interpolation can be achieved and can provide an improved means for interpreting the indicia on a scale for faster and more accurate reading of an absolute relative position.

The memory means can allow the location of each of the indicia to be set by calibration either before or after the installation of the device. The accuracy of the device, therefore, is determined by the accuracy of the calibration recorded in the memory means as opposed to the accuracy of the placement of the indicia on the scale.

The position calibration machine can be a laser interferometer. The recording in the electronic memory can create a look up table of calibrated positions with respect to the scale for each of the position indicia. A reading device can read the indicia and the look up table can be used to determine the calibrated position of the machine reader with respect to the scale.

To provide an absolute relative position sensing to be easily determined utilising the indicia, the position line can be defined by a set of position segments. At least two indicia are disposed in each of the segments and the arrangement of the indicia is such that the position relationship between the at least two indicia in each segment is unique to define the segment. The combination of the line positions of the at least two indicia define a precise position along the position line within a segment. For example, if the indicia are slits in a bar scale read by a light source and charge-coupled device, two slits can be placed in every segment along the scale with the distance between the slits being unique for each segment. Thus, the distance between the slits defines in which segment along the scale these slits are located. Then, for each pair of slits the combination of the position of these two slits can be used to define a precise position within the segment by means of calibration. By this means the indicia do not have to be distinguishable from each other and more information can be provided for both calibration position (where in segment) and absolute position (uniqueness of segment) definition.

The calibration position represented by the combination of the slit positions and the unique segment position indicated by the difference of the positions can be stored in a memory such as a read only memory. This read only memory can preferably be reprogrammed to recalibrate the absolute relative positioning device following any distortion that might occur during mounting.

A method of determining absolute position is thus provided by forming the position indicia in the manner described and by calibrating the scale so as to record in the electronic memory a look up table of the combination (where in segment) data and difference (which segment) data for each segment. By reading the two indicia of a segment and using the look up table an absolute position of the reader with respect to the scale can be determined.

Preferably, the reading device comprises a charge-coupled device and the indicia on the scale comprises slits in a metal bar. Also, preferably, the device includes a light source which approximates a lambertian light source extending over a span at least wide enough always to be directing light through the at least two slits of each segment. The charge-coupled device preferably, also, spans this length.

The method of reading the indicia may include using a charged coupled device to read more than one characteristic of each indicia. Thus, instead of reading just one pixel (the first or the last, for example) the method can read the first and last. It is even more preferably to read the intensity of all pixels influenced by the indicia and to use the mean position of the indicia's intensity distribution (or full aperture) as a maximum information-carrying indication of the position of the indicia.

Correction for thermal expansion can be provided by a temperature sensor which senses the temperature of the scale and a calculation for compensating for the thermal expansion of the scale based on this temperature.

The invention is diagrammatically illustrated by way of example in the accompanying drawings in which:-
Figure 1 is an exploded, cutaway perspective view of one embodiment of a precision electronic absolute position device according to the invention;
Figure 2 is a sectional view of the device of Figure 1 taken on lines II-II of Figure 1;
Figure 3 is a schematic electronic circuit of the device of Figure 1;
Figure 4 is a schematic view of basic elements of the device of Figure 1;
Figure 5 is a diagram illustrating electrical pulses generated by the device of Figure 1;
Figure 6 is an enlarged view of a portion of the device of Figure 1; and
Figure 7 is a side view of a portion of the device of Figure 1.

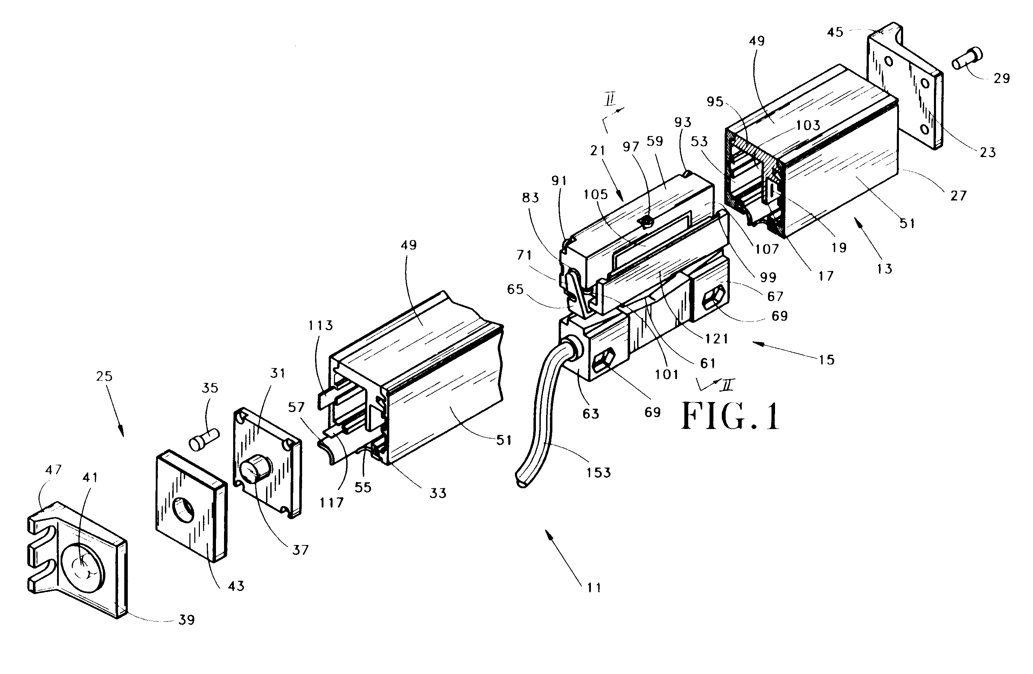

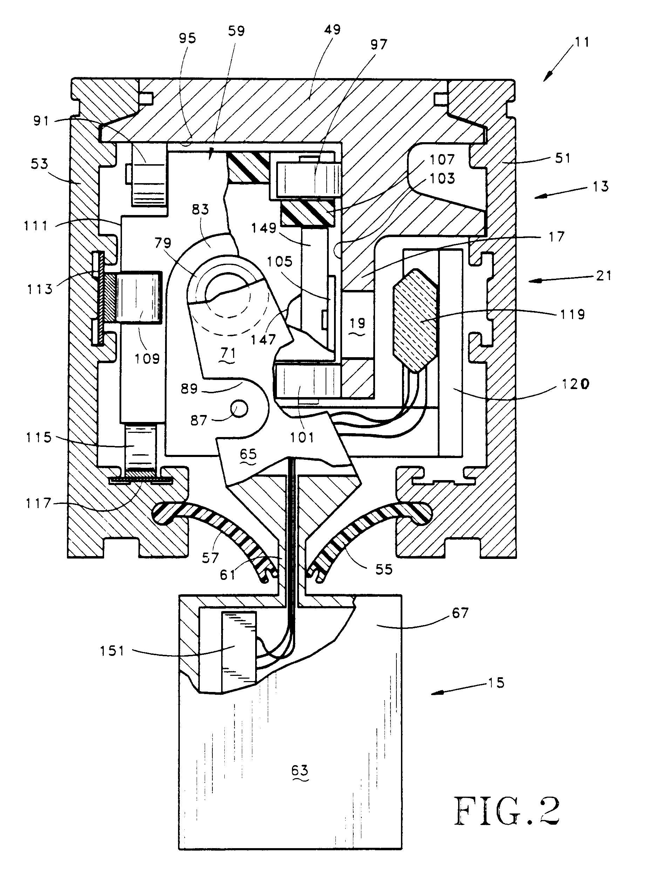

Referring to the drawings and firstly to Figures 1, 2 and 4, a position device 11 includes a scale housing 13 and a traveller assembly 15. The scale housing 13 has a scale bar 17 with slits 19 therein which can be read by an electrical-optical reader 21 of the traveller assembly 15.

By fixing the scale housing 13 to a first element or device and the traveller assembly 15 to a second element or device, the relative position between the two elements can be electrically read by the device 11. For example, the scale housing 13 can be attached to a movable table of a lathe and the traveller assembly 15 can be attached to a bed of the lathe so that the relative position between the table and the bed can be electrically read. This would allow the bed to be accurately positioned with respect to a work piece mounted on a chuck fixed for rotation on the bed for accurate, automatic positioning and machining operations on the work piece.

To attach the scale housing 13 to an external element or device, end caps 23 and 25 are provided. The end cap 23 is a single piece which is attached directly to a fixed or reference end 27 of the scale housing 13 by assembly screws 29. The end cap 25 comprises three pieces (31, 39, 43) and functions as a floating end mount. A cap piece 31 is connected to a floating or non-reference end 33 of the housing 13 by assembly screws 35. A cylindrical protruding nose 37 extends from the cap piece 31 to provide a floating connection to a mount piece 39. A recess 41 closely but freely receives the cylindrical nose 37. A compressible spacer 43 is resiliently captured between the cap piece 31 and the mount piece 39 with the nose 37 extending therethrough. The spacer 43 is of a resilient, compressible, insulative material. A flange 45 is provided on the end cap 23 with bolt holes therethrough to allow the end cap 23 to be bolted to an element such as a work table of a lathe. A flange 47 of the mount piece 39 is provided with bolt holes so that it can be bolted in this same element. In this way the scale housing 13 is joined to the element or device in a way which fixes the reference end against movement while allowing the non-reference end a relative freedom of movement. This relative freedom of movement is required so that the mounting process does not twist or distort the scale housing 13. Further, the method of mounting allows thermal expansion of the housing to occur without distortion of the housing. The compressible spacer 43 protects the housing against vibration and foreign object damage, shipping damage and mismounting.

The scale housing 13 comprises a scale extrusion 49, a right side housing extrusion 51, a left side housing extrusion 53 and seal lips 55 and 57. The components 49 to 57 enclose and protect a rider 59 of the traveller assembly 15 against contamination and physical abuse. The rider 59 carries the electrical-optical reader 21 for the scale bar 17, which scale bar 17 extends as an interior flange from the scale extrusion 49. Mating grooves and flanges are provided between the right and left side housing extrusions 51, 53 and the scale extrusion 49 so that these pieces form a solid housing when connected to the cap piece 31 and the end cap 23. The extrusion pieces 49, 51 and 53 can, for example, all be formed from aluminium.

The seal lips 55 and 57 are formed of a flexible material which is preferably chemically resistant such as the material sold under the Registered Trade Mark Teflon or fluorosilicone. The seal lips 55 and 57 have beads which are retained in a widened space in grooves in the left and right side housing extrusions 51 and 53, respectively. The seal lips 55 and 57 extend toward each other to form a vee shape which is able to be opened by a neck 61 of a traveller head 63 of the traveller assembly 15.

The traveller head 63 is a single piece of moulded material such as the material sold under the Registered Trade Mark Ryton. This single piece includes a yoke 65 and a head piece 67 connected by the neck 61. Bolt holes 69 are provided in the head piece 67 so that the traveller head 63 can be connected to an external element by bolts extending through the bolt holes 69. In this way the traveller head 63 can be connected to a device such as the bed of a lathe so that the relative position between the bed (attached to the traveller head 63) and the movable table (attached to the scale housing 13) can be determined.

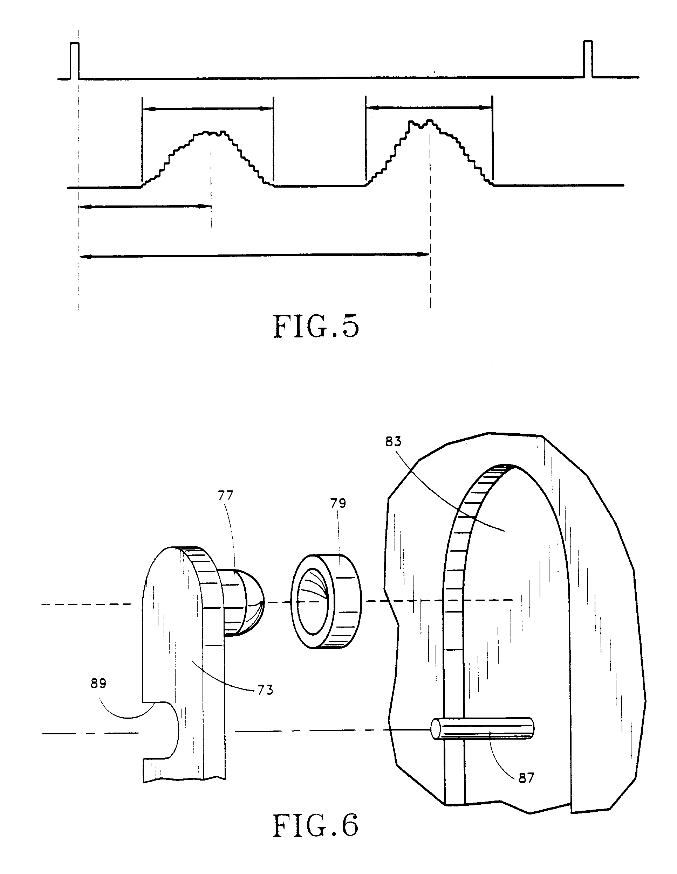

As can be seen in Figures 1, 2, 6 and 7, the yoke 65 of the traveller head 63 has a pair of arms 71, 73 which have semi-spherical bearing surfaces 75 and 77, thereon. These bearing surfaces each receive an interface cup 79 and 81 which functions as a floating interface between the end of the rider 59 which is moved by the traveller head 63 because of the yoke 65. The interface cups have a planar surface which is received on a mating planar surface inside a respective recess 83 provided in the end of the rider 59 (shown enlarged in Figure 6).

The yoke arms 71 and 73 are slightly resiliently spread by the close fit of the rider 59 between the interface cups 79 and 81. However, the amount by which the arms are spread and the pressure on the interface cups is not so much as to prevent the planar surfaces of the interface cups from relatively freely gliding on the planar surface of the recess 83. This pressure can be determined by a groove 85 which weakens and improves the flexibility of the arm 71. In this way, the yoke 65 has a reference end at the arm 73 and a non-reference end at the arm 71, similar to the reference and non-reference ends of the housing 13. The characteristics of the material and the size of the groove 85 can determined how stiffly the yoke 65 holds the rider 59.

The object of this connection between the yoke arms 71 and 73 and the rider 59 is to prevent non-linear movements of the traveller head 63 from causing similar non-linear movements of the rider 59. In other words, the rider 59 is desired to be retained in its position with respect to the scale bar 17 as it moves linearly with respect thereto. By providing a five degree of freedom connection between the rider 59 and traveller head 63, this object can be achieved.

To hold the yoke arms 71 and 73 from becoming disconnected entirely from the rider 59 prior to mounting the scale housing 13 and the traveller assembly 15 to the relative position elements which they track, pins 87 are received through retaining pin slots 89 in the yoke arms 71 and 73.

The purpose of the five degree of freedom movement of the yoke 65 and the traveller head 63 with respect to the rider 59 is so that the rider 59 is not urged out of its linear motion with respect to the scale bar 17. In other words it is critical that the linear motion of the rider 59 in its frame of reference (which includes the scale bar 17) is not disturbed by movements in the frame of reference of the traveller head 63 which are other than linear movements parallel to the linear motion of the rider 59 (parallel to an imaginary position line extending through the centre of the bar 17).

Further to improve this restriction of the rider 59 to a linear motion, a unique bearing and spring system is provided. Contact bearings 91 and 93 are provided in the corners of the rider 59 to bear against a first planar reference surface 95 of the scale extrusion 49 adjacent the left side housing extrusion 53. Contact bearings 97, 99 and 101 are disposed on the rider 59 so that they ride on a second planar reference surface 103 of the scale extrusion 49. The second reference surface 103 is formed in part by a surface of the scale bar 17. The second planar surface 103 is disposed at a right angle to the first planar surface 95. The bearings 97, 99 and 101 form a triangle, the centre of which is approximately the centre of a charge-coupled device 105.

The charge-coupled device 105 is positioned so that its face is close to and approximately parallel to a face 107 of the rider 59 which rides adjacent the second planar reference surface 103. Thus, as the bearings 97, 99 and 101 ride on the second planar reference surface 103 the charge-coupled device 105 is held a fixed close distance spaced from the scale bar 17 and the slits 19 therein.

The body of the rider 59 has a right rectangular parallelepiped shape with the rectangular face 107 being a portion thereof. To provide a wide, steady support so as to retain the rider 59 in its linear motion in its frame of reference, the bearings 91, 93, 99 and 101 are disposed at corners of the body. The bearings 91 and 93 are at upper corners of a surface 111 opposite the face 107 and the bearings 99 and 101 are at the lower corners of the face 107. The bearing 97 is at the centre of the upper edge of the face 107.

Opposite the contact bearings 97, 99 and 101 is a leaf spring 109. The leaf spring 109 is attached to the surface 111 of the rider 59 so that it contacts near the centre of this surface. It bears against a leaf spring wear shim 113 which is held in a mating groove on the left side housing extrusion 53. In this way the leaf spring 109 urges the rider 59 so that approximately equal pressure is applied to the bearings 97, 99 and 101. Further, the centre contact helps prevent hysteresis as the rider 59 changes direction.

A leaf spring 115 is provided directly opposite the bearings 91 and 93 on the rider 59. It contacts a leaf spring wear shim 117, which extends in a mating groove in a lower flange of the left side housing extrusion 53. The leaf spring 115 contacts the wear shim 117 at approximately the centre of the rider 59 opposite the bearings 91 and 93 so that it urges the rider 59 to press on the bearings 91 and 93 against the first planar reference surface 95 with approximately equal force.

By use of the five bearings 91, 93, 97, 99 and 101, at the diagonally opposite corners of the rider 59 (the bearing 91 being diagonally opposite the bearing 99 and the bearing 93 being diagonally opposite the bearing 101) and with the bearing 97 being centred on the rectangular edge between the diagonally opposite bearings, the rider 59 is limited to only one degree of freedom in its movement as long as the springs 115 and 109 cause the bearings to be pressed against their reference surfaces with equal strength. This is achieved with a minimum number of bearings and springs. The minimum number is critically important to prevent rocking of the rider and hysteresis which would occur if more bearings were included but not precisely balanced.

The combination of the design of the housing 13, the support of the rider 59 support in the housing 13, and the connection of the traveller 63 to the rider 59 produces a relative motion device which is especially precise and avoids disturbances to linear motion. It isolates the frame of reference of the rider and scale from the frame of reference of the traveller head except for the linear degree of freedom parallel to the bar 17 and its imaginary position line extending longitudinally therethrough. This is important in that it allows the optical reader 21 to track precisely when reading the slits 19 in the scale bar 17.

The housing mounting prevents the scale from being distorted during the mounting process or due to other forces. Particularly, the floating end 33 of the housing 13 protects the travelling surfaces and the scale from distortions. The bearings which support the rider 59 prevent the reader 21 from moving out of a linear path along the bar 19. The connection of the traveller 63 with the rider 59 prevents the out of line motions of the traveller 63 from being transmitted to the rider 59. Thus, precise, repeatable linear motion of the optical reader 21 with respect to the bar 17 and the slits 19 is provided.

The importance of the steady, smooth tracking of the rider 59 along the reference surfaces 95 and 103 in the housing 13 becomes apparent with the understanding of the accuracy which the reader 21 provides. The reader 21 includes the charge-coupled device 105 and a light source 119. The light source 119 is mounted on an arm 120 of the rider 59 which extends around the bar 17. The light source 119 is attached so that it faces the charge-coupled device 105 so as to shine light through the slits 19.

The charge-coupled device 105 is preferably a Texas Instruments Part No. TC104. This device is approximately 50 mm (2 inches) long and has 3,456 pixels arranged along its length for electrically reading light received from the light source 119. Each pixel has both an on/off and a strength of light signal. The charge-coupled device has a dynamic range of approximately 1,000 to 1 and a read speed of faster than 0.5 milliseconds. The construction, operation, reading and powering of such charge-coupled devices is well known to those in the electrical art.

The light source 119 extends over a 50 mm (2 inch) length parallel to and directly in line with the charge-coupled device 105.

Preferably, this light source 119 approximates a lambertian light source over this entire length. In other words, the light source 119 provides uniform, non-directional light along all of the length of the light source so that a slit 19 at any position between the light source 119 and the charge-coupled device 105 will be read uniformly. Electro luminescent panels are commercially available from Luminescence Systems, Inc. and Ouantex, Inc. The operation, construction and powering of such panels are well known to those in the art of light sources. Further, an improved lambertian light source of a type particularly suited for use with the device of the present invention is described in my copending applications USA 216750 and EP 89 304751.4.

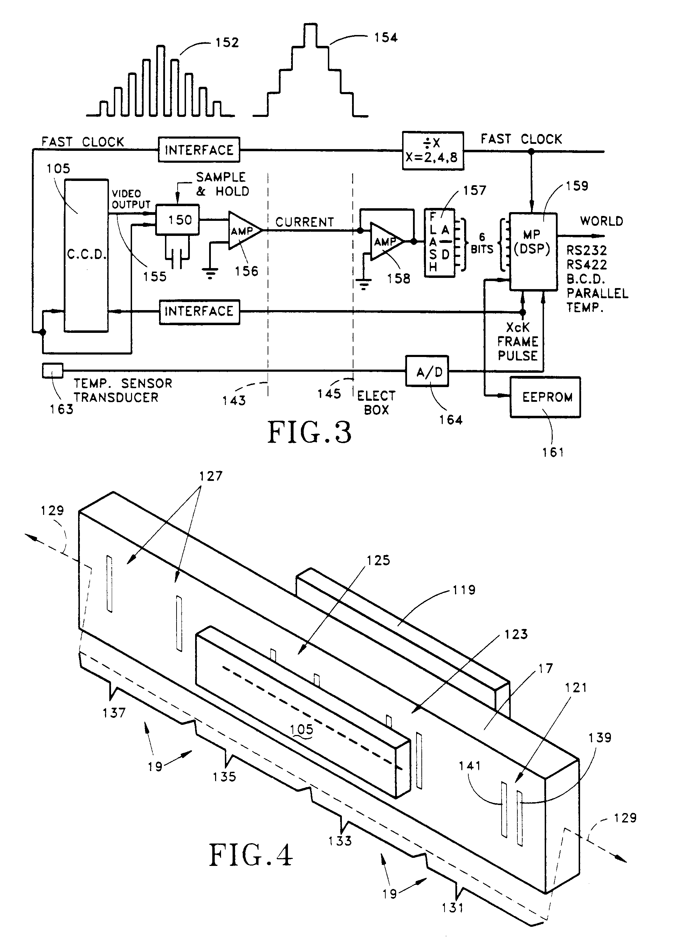

The slits 19 in the scale bar 17 are arranged in pairs along the bar 17. Pairs 121, 123, 125 and 127 are shown in the bar 17 of Figure 4. Each slit 19 extends transversely to an imaginary position line through an imaginary position line which extends through the centre of the bar 17. Each slit 19 also extends transversely through the bar 17. The slits 19 can be formed by laser cutting or by an electrodischarge machine. They do not require precise positioning. The bar 17, the arm 120 and the housing 13 allow only light from the light source 119 to be received by the charge-coupled device 105 through the slits 19.

Conceptually, the scale or distance along a position line 129 can be divided into segments such as segments 131, 133, 135 and 137. These segments are continuous and do not overlap along the position line 129. Each segment has a single pair of slits disposed therein. Thus, the pair 121 is located within the segment 131, the pair 123 is located within the segment 133 and so on.

Each pair of slits defines and determines both the segment and a precise position within the segment. The distance between the slits of each pair is unique for each segment. A distance measurement corresponding to the distance between the slits 19 of the pair 121 thus defines that this pair of slits 121 resides in the segment 131. The distance between the slits 19 of the pair 123, because this distance measurement is different, defines that the pair of slits 123 resides in the segment 133.

A precise position along the position line 129 can be determined by the combination of the locations of the slits 19 in a pair such as the pair 121. For example, if a first slit 139 of the pair 121 were located at 132.1 mm (5.2 inches) along the position line 129 and a second slit 141 of the pair 121 were located 137.1 mm (5.4 inches) along the position line 129, the precise position along the segment defined by the combination would be an average 134.6 mm (5.3 inches) along the position line. Thus, the combination of the slit positions 139 and 141 could define a precise position of 134.6 mm (5.3 inches) along the position line. As described in more detail below, it is not necessary for the slits to be positioned 132.1 mm and 137.1 mm (5.2 and 5.4 inches) for example, while defining a very precise position within the segment.

Figure 5 graphically illustrates the voltage output signal of a charge-coupled device 105 detecting the light from the light source 119 through a pair of slits. The x axis is time and the y axis is voltage. The time illustrated is sufficient for a single scan of the charge-coupled device photosites or pixels. The voltage indicates the amount of light which hit that pixel at the time when the pixel was sampled as the CCD is scanned.

The light distribution resulting from the lambertian light source 119 shining through the slits 19 is essentially a gaussian distribution for each slit. The invention utilizes more than the first or last pixel of a slit signal. Rather, the invention utilizes at least the first and last pixels of a slit signal. The first and last can be determined by a signal greater than a predetermined signal intensity. These first and last signals are then averaged to find the middle of the two (a time measurement since the pixels are consecutively sampled by a fast clock). Even better than a first and last pixel representation of the slit signal is a mathematical derivation of the middle of the gaussian distribution which utilizes all of the signal intensities greater than a predetermined amount resulting from light passing through the slit and driving the charge-coupled device's photosites. Such a deviation can be mathematically determined by summing all of the signal intensities and utilizing a Gaussian distribution formula to determine the middle of the slit signal.

Thus, the light signal passing through the slits 139 and 141 is reduced to a first time measurement t1 and a second time measurement t2. The quantity t1 is directly proportional to the location of the slit 139 with respect to the charge-coupled device 105 and the quantity t2 is directly proportional to the location of the slit 141 with respect to the charge-coupled device 105.

The quantity t2 minus t1 is unique for each segment because the distance between the pairs in each segment is unique. The quantity t1 plus t2 can represent a precise position within the segment such as the mean distance between the slits 139 and 141, for example.

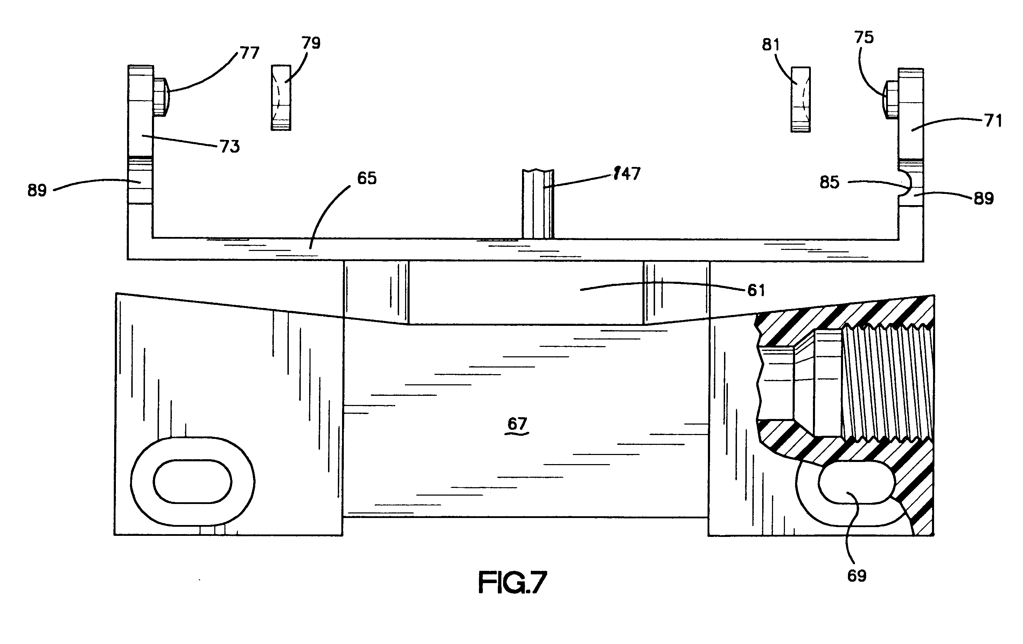

To perform the reading operations described above, electronics schematically illustrated in Figure 3 are utilized. The electronic components to the left of a dotted line 143 are disposed on a circuit board attached inside the rider 59. The components to the right of a dotted line 145 can be disposed in a control box (not shown) disposed outside the device; for example, attached to the bed of a lathe. A small, flexible electrical connection 147 (Figure 7) connects a circuit board 149 and the rider 59 to a signal amplifier board 151 in the traveller head 63. A flexible cable with electrical conduit 153 connects the amplifier board 151 to the control box (not shown).

As shown in Figure 3, the charge-coupled device 105 produces a video output signal 155 which is conveyed to a sample and hold amplifier 150. The signal of a single slit is depicted schematically at 152 prior to sample and hold and at 154 subsequent to sample and hold. The sample and hold signal is further amplified by amplifiers 156 and 158 and then converted to a digital representation by a flash analog to digital converter 157. This digital signal is then processed by a digital signal processor 159. The result is a rapid determination of a quantity t1 (a time quantity) which represents the location of the first slit being scanned with respect to the CCD 105 and a quantity t2 (also a time quantity) which represents the location of the second slit being scanned with respect to the CCD 105. These quantities t1 and t2 are not simply single pixel locations but are mathematically derived middles of the slits resulting from the combination of pixel (at least first and last) illuminated through the slits. Thus, the slits are much more accurately located with respect to the CCD using this method of slit reading.

Rather than simply calculating t1 and t2 the microprocessor 159 determines the quantities t1 plus t2 and t2 minus t1. These quantities define the segment (t2-t1) and the precise position in the segment (t1+t2). Of course, since t1+t2 uses even more position information, it is even more accurate as a position indicator than a single slit quantity (t1 or t2).

An electronic memory 161 is utilized to communicate with the microprocessor 159. Thus, each segment identifier (t2 minus t1) quantity is recorded in the memory 161. As the microprocessor 159 determines a t2 minus t1 from the signal from the charge-coupled device 105 it compares this quantity with the quantities recorded in the memory 161 and thereby determines a segment (such as the segment 131) within which the pair of slits read by the charge-coupled device 105 preside. The memory 161 has a corresponding precise mean distance (for example) of the absolute location between the slits of this particular segment residing therein (a look up table). This quantity is retrieved from the memory 161 and compared with the t1 plus t2 signal resulting from the reading of the slits to provide a precise absolute relative position of the charge-coupled device with respect to the slits being read. Because the position of the charge-coupled device 105 with respect to the slits corresponds to a precise position relationship between the elements to which they are connected, this provides a precise position relationship between the elements to which the device is connected. For example, the precise position of the movable table of a lathe with respect to the lathe bed can be determined.

In order initially to record the t2 minus t1 position information and the t2 plus t1 information in the memory 161 it is desirable that the memory 161 be an electrically erasable programmable read only memory. Initially, a laser interferometer can be connected to the fixed or reference end 27 of the housing 13 and the precise positions of the slits 19 can be read utilizing the laser interferometer as the rider 59 moves down the bar 17. The precise t2 minus t1 and t1 plus t2 quantities can be calculated utilizing the data read from the charge-coupled device 105 combined with the accurate position data provided by the laser interferometer as a calibration run is made.

Thus a look up table is formed in the memory 161 which has a segment identifier quantity and a position quantity for each segment. For example, a look up table could be as follows:

| Look Up Table | | | | |
|---|---|---|---|---|
| Segment | t2-t1 | | Calibrated Absolute Position for t1+t2 | |
| | mm | inches | mm | inches |
| 131 | 10.16 | .4 | 12.88123 | 0.507135 |
| 133 | 12.70 | .5 | 38.26147 | 1.506357 |
| 135 | 15.24 | .6 | 63.28037 | 2.491353 |
| 137 | 17.78 | .7 | 86.85200 | 3.419370 |

After the quantity t2-t1 is calculated the read only memory returns a calibrated absolute position for t1+t2 corresponding to t2-t1. The actual t1+t2 represents the position of the CCD with respect to the calibrated position (where on the CCD the combined calibrated position quantity falls). The microprocessor then compares the actual t1+t2 to the calibrated position in order to determine the absolute position of the CCD with respect to the scale. For example, an actual t1+t2 could be 4738.321 (pixels or clock steps) which could be determined by mathematical formula to correspond to 25.84097 mm (1.017361 inches) along the CCD. This is combined with the calibrated position of the t1+t2 for the determined segment 133 to indicate a precise absolute position of 38.26147 + 25.84097 or 64.10244 mm (1.506357 + 1.017361 or 2.523718 inches).

The method includes, therefore, calibrating with a calibration device such as a laser interferometer. This step should be performed with the device 11 attached in a reading position and operating so that the relative positions of the slits 19 are calibrated by combining the quantities read by the device 11 with the position quantities actually determined by the calibration of the reader 21 with respect to each slit 19.

As the calibration of the scale proceeds, the determined positions of the slits or indicia are recorded in the memory 161 so as to create a look up table of calibrated position with respect to the scale for each of the indicia or segments. After the table has been created, position indicia are read by the reader 21 and the look up table is used to determined the calibrated position of the machine reader with respect to the scale. As can be seen, the cost of the encoder can be dramatically reduced because precision cutting of the slits 19 in the bar 17 is not required. The precision of the device results solely from the precision of the calibration utilising a device such as a laser interferometer and from the accuracy of the reading method by which the slits 19 are located with respect to the charge-coupled device 105. The memory 161 retains this precision without precise location of the slits in the bar 17. By this means an accuracy of 0.0025 to 0.000125 mm (0.0001 to 0.000005 inches) can be obtained over a length of a few metres (several feet).

The output of the microprocessor 159 is an electrical position signal and this signal can be used automatically electrically to control the functions of the device to which the position device 11 is attached. For example, movements of a lathe could be automatically programmed and controlled.

Because this amount of accuracy is sensitive to temperature distortions, a temperature sensor 163 can be utilised mounted on the spring 109. This temperature measurement from the temperature sensor 163 is converted to an electrical signal, converted to a digital signal by an analog to digital converter 164, and conveyed to the microprocessor 159 which can, thereby, mathematically adjust for the temperature expansion of the bar 17. The mathematical formula for temperature conversion can be empirically derived using a laser interferometer calibration at representative temperatures.

Although the device functions best when construed specifically to achieve the objects described above, it is possible to adapt old devices by adding electronics to calibrate, read and store as taught above. In this way an old imprecise scale and reader can be made as precise as the calibration interferometer can read. Similarly, if a device is damaged or otherwise becomes inaccurate, it can be recalibrated if the memory 161 is an erasable programmable read only memory or the memory chip can be replaced.

Although the position line 129 is shown and described as being linear, it is possible to create a curvilinear position line to modify the concepts to, for example, a rotary device. Although the segments are described as being continuous, it is entirely possible to have discontinuous segments as long as only certain portions of the scale require reading. It is also possible to use the calibration and reading method described vastly to improve a serial or counter-type position device. Thus, even without pairings to indicate absolute position, the calibration of counted steps allows an imprecise serial device to be made very precise.

Although the device can be of many different sizes, it would typically be perhaps 100 mm to a few metres (a few inches to several feet) long. The device depicted is approximately 1.2 m (4 feet) long and approximately 50 mm (2 inches) wide. The slits 19 are typically 1 mm (0.04 inches) wide. If desired, the width of the slits 19 can be used to provide additional information or as a substitute for slit pairs. However, this would reduce the accuracy of the device by reducing the amount of information used to determine the positions.

## Claims

1. A precision electronic absolute position device (11) comprising a scale (17) disposed along a position line (129) defined by a set of position segments (131, 133, 135, 137);
the scale (17) having machine readable indicia (19) fixed thereon along the position line (129) such that at least two of the indicia are disposed in each of the segments and the arrangement of the indicia is such that the position relationship between the at least two indicia in each of the segments is unique to define that segment and the combination of the line positions of the at least two indicia defines a precise position along the position line (129) within that segment;
a machine reading means (105) movable with respect to the scale (17) along the position line (129) such that the reading means is able to scan for reading the at least two indicia of at least one segment, for reading and converting to electrical signals the at least two indicia in the at least one segment of the scale such that the electrical signals indicate the line position relationship between the at least two indicia, the combination of the line positions of the at least two indicia and the relative line position of the machine reading means (105) with respect to the indicia;
electronic memory (161) means to retain and electronically communicate for each segment a segment indication corresponding to the line position relationship between the at least two indicia of each segment, and an indication of precise position along the position line corresponding to the segment indication and the combination of line positions of the at least two indicia of said segment; and
position determining means (159) to receive the electronic signals from the reading means, interpret the signals using the memory means (161), and determine therefrom the absolute position along the position line (129) of the reading means (105) with respect to the scale (17).

2. A precision electronic absolute position device according to claim 1, wherein the position means comprises:
calculation means (159) connected to the reading means (105) and the memory means (161) to calculate from information derived from the electrical signals from the reading means and from information derived from the memory means a precise position measurement along the position line (129) corresponding to the segment adjacent the reading means and a relative position measurement of the reading means with respect to the precise position.

3. A precision electronic absolute position device according to claim 2, wherein the indicia comprise slits (19) extending through the bar (17) oriented to extend across the position line (129) to allow light to pass therethrough.

4. A precision electronic absolute position device according to claim 3, wherein the machine reading means comprises a charge-coupled device (105) disposed on one side of the bar (17) and extending along and adjacent the position line (129) a sufficient distance always to be in position to read the at least two slits of at least one segment.

5. A precision electronic absolute position device according to claim 4, which further comprises a light source (119) disposed on an opposite side of the bar (17) so as to direct light through the slits (19) to the charge-coupled device (105).

6. A precision electronic absolute position device according to claim 5, wherein the light source (119) is connected to the machine reading means to move with the machine reading means as it moves with respect to the position line (129) of the scale (17).

7. A precision electronic absolute position device according to claim 6, wherein the light source (119) approximates a lambertian light source and extends adjacent the position line (129) of the scale (17) a sufficient distance always to be in position to direct light through the at least two slits (19) positioned for reading by the charge-coupled device (105).

8. A precision electronic absolute position device according to claim 2, wherein the memory means comprises a read only memory device (16) and wherein the calculation means comprises a computer (159).

9. A precision electronic absolute position device according to claim 8, which further comprises a temperature sensor (163) for sensing the temperature of the scale (17) and converting the sensed temperature to an electrical signal indicating the temperature and wherein the calculation means (159) compensates for the thermal expansion of the scale (17) by using the electrical signal indicating the temperature as it calculates the precise position measurement along the position line (129) corresponding to the segment (131, 133, 135, 137) adjacent the reading means (105).

10. A precision electronic absolute position device according to claim 8, wherein the read only memory comprises an erasable programmable read only memory device (161) so that the memory indications can be reset to correct for changes in the positions represented by the memory indications

11. A precision electronic absolute position device according to claim 7, wherein the calculation means comprises a means for calculating the middle of the light intensity of light which is directed through the slits (19) to the charge-coupled device (105).

12. A precision electronic absolute position device according to claim 11, wherein the light source (119) is positioned less than 1.27 mm (0.050 inches) from the bar (17).

13. A precision electronic absolute position device according to claim 12, wherein the charge-coupled device (105) is positioned less than 1.27 mm (0.050 inches) from the bar (17).

14. A precision electronic absolute position device according to claim 13, wherein the charge-coupled device (105) has a resolution of at least 19.7 pixels per mm (500 pixels per inch), a dynamic range of at least 500 to 1 and a read speed of less than 2 milliseconds.

15. A precision electronic absolute position device according to claim 1, wherein the scale (17) has only two machine readable indicia (19) fixed thereon for each of the segments (131, 133, 135, 137).

16. A precision electronic absolute position device according to claim 15, wherein the scale (17) comprises a metal member and the indicia comprise slits (19) extending through the metal member.

17. A precision electronic absolute position device according to claim 16, wherein each of the segments (131, 133, 135, 137) is discrete and segments do not overlap.

18. A precision electronic absolute position device according to claim 17, wherein the slits (19) each have a width in the range of approximately 0.127 mm to 2.54 mm (0.005 inches to 0.1 inches).

19. A precision electronic absolute position device according to claim 18, wherein the two slits (19) of each of the segments (131, 133, 135, 137) are spaced apart from each other a unique distance in the range of approximately 1.27 mm to 50.8 mm (0.05 inches to about 2.0 inches).

20. A precision electronic absolute position device according to claim 19, wherein the machine reading means comprises a charge-coupled device (105) with a length sufficient always to span for reading the two slits (19) of at least one segment, a resolution of at least 19.7 pixels per mm (500 pixels per inch), a dynamic range of at least 500 to 1 and a read speed of less than 2 milliseconds.

21. A precision electronic absolute position device according to claim 20, which further comprises a light source (119) connected to move with the charge-coupled device (105) and disposed to direct light through the slits (19) to the charge-coupled device (105); the light source (119) approximating a lambertian light source extending along and adjacent the metal member (17) a sufficient length always to direct such light for reading through the two slits of at least one segment.

22. A method of deriving position information from a position indicating slit (19) in a scale bar (17), comprising:
directing light through the slit (19) onto a multiple pixel charge-coupled device (105) such that more than one of the pixels is illuminated; the illuminated pixels of the charge-coupled device producing electrical signals proportional to the intensity of the illumination; and
using at least two of the produced electrical signals to form a position information composite of at least two elements.

## Patentansprüche

1. Elektronisches Präzisionsgerät (11) zur Absolutpositionierung, das folgendes umfaßt:
eine Skala (17), die entlang einer durch einen Satz Positionssegmente (131, 133, 135, 137) definierten Positionslinie (129) angeordnet ist;
wobei auf der Skala (17) entlang der Positionslinie (129) maschinenlesbare Marken (19) so angebracht sind, daß sich mindestens zwei der Marken in jedem der Segmente befinden, und die Anordnung der Marken so gewählt ist, daß die relative Position zwischen den mindestens zwei Marken in jedem der Segmente eindeutig ist, um das betreffende Segment zu definieren, und daß die Kombination der Linienpositionen der mindestens zwei Marken eine präzise Position entlang der Positionslinie (129) innerhalb des betreffenden Segments definiert;
eine Maschinenleseeinrichtung (105), die in bezug auf die Skala (17) entlang der Positionslinie (129) derart bewegbar ist, daß die Leseeinrichtung die mindestens zwei Marken von mindestens einem Segment zum Lesen abtasten kann, um die mindestens zwei Marken in dem mindestens einen Segment zu lesen und in elektrische Signale umzuwandeln, so daß die elektrischen Signale die relative Linienposition zwischen den mindestens zwei Marken, die Kombination der Linienpositionen der mindestens zwei Marken und die relative Linienposition der Maschinenleseeinrichtung (105) in bezug auf die Marken melden;
eine elektronische Speichereinrichtung (161) zur Sicherung und elektronischen Übermittlung einer Segmentanzeige für jedes Segment entsprechend der relativen Linienposition zwischen den mindestens zwei Marken jedes Segments, und eine Anzeige der präzisen Position entlang der Positionslinie entsprechend der Segmentanzeige und der Kombination der Linienpositionen der mindestens zwei Marken dieses Segments; und
eine Positionsbestimmungseinrichtung (159), die die elektronischen Signale von der Leseeinrichtung empfängt, die Signale unter Verwendung der Speichereinrichtung (161) interpretiert und daraus die absolute Position entlang der Positionslinie (129) der Leseeinrichtung (105) in bezug auf die Skala (17) ermittelt.

2. Elektronisches Präzisionsgerät zur Absolutpositionierung nach Anspruch 1, wobei die Positioniereinrichtung folgendes umfaßt:
eine mit der Leseeinrichtung (105) und der Speichereinrichtung (161) verbundene Berechnungseinrichtung (159), die aus von den elektrischen Signalen der Leseeinrichtung abgeleiteten Informationen und aus von der Speichereinrichtung abgeleiteten Informationen eine präzise Positionsmessung entlang der Positionslinie (129) entsprechend dem Segment neben der Leseeinrichtung sowie eine relative Positionsmessung der Leseeinrichtung bezüglich der präzisen Position berechnet.

3. Elektronisches Präzisionsgerät zur Absolutpositionierung nach Anspruch 2, bei dem die Marken Spalte (19) umfassen, welche durch die Leiste (17) verlaufen und so orientiert sind, daß sie die Positionslinie (129) schneiden, um den Durchgang von Licht zu gestatten.

4. Elektronisches Präzisionsgerät zur Absolutpositionierung nach Anspruch 3, bei dem die Maschinenleseeinrichtung ein Ladungsverschiebeelement (105) umfaßt, das an einer Seite der Leiste (17) angeordnet ist und sich über eine ausreichend lange Strecke entlang und neben der Positionslinie (129) erstreckt, so daß es stets so positioniert ist, daß es die mindestens zwei Spalte des mindestens einen Segments lesen kann.

5. Elektronisches Präzisionsgerät zur Absolutpositionierung nach Anspruch 4, das weiterhin eine Lichtquelle (119) umfaßt, die an einer gegenüberliegenden Seite der Leiste (17) so angeordnet ist, daß sie Licht durch die Spalte (19) auf das Ladungsverschiebeelement (105) schickt.

6. Elektronisches Präzisionsgerät zur Absolutpositionierung nach Anspruch 5, bei dem die Lichtquelle (119) so mit der Maschinenleseeinrichtung verbunden ist, daß sie sich mit der Maschinenleseeinrichtung bewegt, wenn diese in bezug auf die Positionslinie (129) der Skala (17) verfahren wird.

7. Elektronisches Präzisionsgerät zur Absolutpositionierung nach Anspruch 6, bei dem die Lichtquelle (119) in etwa einem Lambert-Strahler entspricht und neben der Positionslinie (129) der Skala (17) über eine ausreichende Strecke verläuft, um stets so positioniert zu sein, daß sie Licht durch die zum Lesen mittels des Ladungsverschiebeelements (105) positionierten mindestens zwei Spalte (19) schickt.

8. Elektronisches Präzisionsgerät zur Absolutpositionierung nach Anspruch 2, bei dem die Speichereinrichtung eine Festwertspeichereinrichtung (16) und die Berechnungseinrichtung einen Rechner (159) umfaßt.

9. Elektronisches Präzisionsgerät zur Absolutpositionierung nach Anspruch 8, das des weiteren einen Temperaturfühler (163) zur Erfassung der Temperatur der Skala (17) und zur Umwandlung der erfaßten Temperatur in ein elektrisches die Temperatur meldendes Signal umfaßt, und bei dem die Berechnungseinrichtung (159) die Wärmedehnung der Skala (17) anhand des die Temperatur meldenden elektrischen Signals ausgleicht, indem sie die präzise Positionsmessung entlang der Positionslinie (129) entsprechend dem Segment (131, 133, 135, 137) neben der Leseeinrichtung (105) berechnet.

10. Ein elektronisches Präzisionsgerät für die Absolutpositionierung nach Anspruch 8, bei dem der Festwertspeicher eine löschbare programmierbare Festwertspeichereinrichtung (161) umfaßt, so daß die Speicheranzeigen zur Korrektur von durch die Speicheranzeigen repräsentierten Positionsänderungen rückgesetzt werden können.

11. Elektronisches Präzisionsgerät für die Absolutpositionierung nach Anspruch 7, bei dem die Berechnungseinrichtung eine Einrichtung zur Berechnung des Mittelwerts der Lichtstärke von Licht umfaßt, das durch die Spalte (19) auf das Ladungsverschiebeelement (105) gerichtet ist.

12. Elektronisches Präzisionsgerät zur Absolutpositionierung nach Anspruch 11, bei dem die Lichtquelle (119) in einem Abstand von weniger als 1,27 mm (0,050 Zoll) von der Leiste (17) positioniert ist.

13. Elektronisches Präzisionsgerät zur Absolutpositionierung nach Anspruch 12, bei dem das Ladungsverschiebeelement (105) in einem Abstand von weniger als 1,27 mm (0,050 Zoll) von der Leiste (17) positioniert ist.

14. Elektronisches Präzisionsgerät zur Absolutpositionierung nach Anspruch 13, bei dem das Ladungsverschiebeelement (105) eine Auflösung von mindestens 19,7 Pixel pro mm (500 Pixel pro Zoll), einen Dynamikbereich von mindestens 500 : 1 und eine Lesegeschwindigkeit von weniger als 2 ms hat.

15. Elektronisches Präzisionsgerät zur Absolutpositionierung nach Anspruch 1, bei dem auf der Skala (17) nur zwei maschinenlesbare Marken (19) für jedes der Segmente (131, 133, 135, 137) angebracht sind.

16. Elektronisches Präzisionsgerät zur Absolutpositionierung nach Anspruch 15, bei dem die Skala (17) ein Metallteil umfaßt und die Marken durch das Metallteil verlaufende Spalte (19) umfassen.

17. Elektronisches Präzisionsgerät zur Absolutpositionierung nach Anspruch 16, bei dem jedes der Segmente (131, 133, 135, 137) diskret ist, und die Segmente sich nicht überlappen.

18. Elektronisches Präzisionsgerät zur Absolutpositionierung nach Anspruch 17, bei dem die Spalte (19) jeweils eine Breite im Bereich von ca. 0,127 mm bis 2,54 mm (0,005 Zoll bis 0,1 Zoll) besitzen.

19. Elektronisches Präzisionsgerät zur Absolutpositionierung nach Anspruch 18, bei dem die beiden Spalte (19) jedes der Segmente (131, 133, 135, 137) zueinander in einem eindeutigen Abstand im Bereich von ca. 1,27 mm bis 50,8 mm (0,05 Zoll bis etwa 2,0 Zoll) angeordnet sind.

20. Elektronisches Präzisionsgerät zur Absolutpositionierung nach Anspruch 19, bei dem die Maschinenleseeinrichtung das Ladungsverschiebeelement (105) umfaßt, dessen Länge ausreicht, um stets jeweils die zwei Spalte (19) von mindestens einem Segment zum Lesen zu überbrücken, und das eine Auflösung von mindestens 19,7 Pixel pro mm (500 Pixel pro Zoll), einen Dynamikbereich von mindestens 500 : 1 und eine Lesegeschwindigkeit von weniger als 2 ms aufweist.

21. Elektronisches Präzisionsgerät zur Absolutpositionierung nach Anspruch 20, das ferner die Lichtquelle (119) umfaßt, die so angeschlossen ist, daß sie sich mit dem Ladungsverschiebeelement (105) bewegt, und so angeordnet ist, daß sie Licht durch die Spalte (19) auf das Ladungsverschiebeelement (105) richtet; wobei die Lichtquelle (119) in etwa einem Lambert-Strahler entspricht, welcher sich entlang und neben dem Metallteil (17) über eine hinreichende Länge erstreckt, um stets dieses Licht zum Lesen durch die beiden Spalte des mindestens einen Segments zu schicken.

22. Verfahren zur Ableitung von Positionsinformationen aus einem Positionsanzeigespalt (19) in einer Skalenleiste (17), das folgendes umfaßt:
Richten von Licht durch den Spalt (19) auf ein mehrere Pixel breites Ladungsverschiebeelement (105) in der Weise, daß mehr als eines der Pixel beleuchtet ist; wobei die beleuchteten Pixel des Ladungsverschiebeelements elektrische Signale proportional zur Beleuchtungsstärke erzeugen;
und wobei mindestens zwei der erzeugten elektrischen Signale zur Bildung einer Positionsinformation, die sich aus mindestens zwei Elementen zusammensetzt, herangezogen werden.

## Revendications

1. Dispositif électronique de mesure de précision de positions absolues (11) comprenant une échelle (17) disposée le long d'une ligne de positions (129) définie par un ensemble de segments de positions (131, 133, 135, 137) ;
l'échelle (17) comportant des graduations (19) lisibles par la machine, ces graduations étant fixées sur l'échelle le long de la ligne de positions (129) de façon que deux au moins des graduations soient disposées dans chacun des segments et que la disposition des graduations soit telle que la relation de positions entre les deux graduations au moins de chacun des segments soit unique pour définir ce segment, tandis que la combinaison des positions de ligne des graduations au moins au nombre de deux, définit une position précise le long de la ligne de positions (129) à l'intérieur de ce segment ;
des moyens de lecture de machine (105) pouvant se déplacer par rapport à l'échelle (17) le long de la ligne de positions (129) de façon que ces moyens de lecture soient capables d'effectuer un balayage pour lire les graduations au moins au nombre de deux du segment au moins unique, de manière à lire et transformer en signaux électriques les deux graduations au moins du segment au moins unique de l'échelle, pour que ces signaux électriques indiquent la relation de positions de ligne entre les deux graduations au moins, la combinaison des positions de ligne des deux graduations au moins, et la position de ligne relative des moyens de lecture de machine (105) par rapport à la graduation ;
des moyens de mémoire électroniques (161) destinés à conserver et à communiquer électroniquement, pour chaque segment, une indication de segment correspondant à la relation de positions de ligne entre les deux graduations au moins de chaque segment, et une indication de position précise le long de la ligne de positions, cette indication correspondant à l'indication du segment et à la combinaison des positions de ligne des deux graduations au moins de ce segment ; et
des moyens de détermination de position (159) destinés à recevoir les signaux électroniques des moyens de lecture, à interpréter ces signaux en utilisant les moyens de mémoire (161), et à déterminer à partir de ceux-ci la position absolue, le long de la ligne de positions (129), des moyens de lecture (105) par rapport à l'échelle (17).

2. Dispositif électronique de mesure de précision de positions absolues selon la revendication 1, caractérisé en ce que les moyens de détermination de position comprennent :
des moyens de calcul (159) branchés aux moyens de lecture (105) et aux moyens de mémoire (161) pour calculer, à partir de l'information provenant des signaux électriques des moyens de lecture et de l'information provenant des moyens de mémoire, une mesure de position précise correspondant, le long de la ligne de positions (129), au segment adjacent aux moyens de lecture, et une mesure de position relative des moyens de lecture par rapport à la position précise.

3. Dispositif électronique de mesure de précision de positions absolues selon la revendication 2, caractérisé en ce que les graduations sont constituées par des fentes (19) traversant la barre (17) et orientées de manière à être disposées en travers de la ligne de positions (129) pour permettre à la lumière de passer à travers ces fentes.

4. Dispositif électronique de mesure de précision de positions absolues selon la revendication 3, caractérisé en ce que les moyens de lecture de machine sont constitués par un dispositif à charges couplées (105) disposé d'un côté de la barre (17) et s'étendant le long de la ligne de positions (129) au voisinage de celle-ci et à une distance suffisante pour être toujours en place de manière à lire les deux fentes au moins du segment au moins unique.

5. Dispositif électronique de mesure de précision de positions absolues selon la revendication 4, caractérisé en ce qu'il comprend en outre une source de lumière (119) disposée du côté opposé de la barre (17) pour diriger de la lumière à travers les fentes (19) de façon que cette lumière atteigne le dispositif à charges couplées (105).

6. Dispositif électronique de mesure de précision de positions absolues selon la revendication 5, caractérisé en ce que la source de lumière (119) est reliée aux moyens de lecture de machine de manière à se déplacer solidairement de ces moyens de lecture de machine lorsqu'ils se déplacent par rapport à la ligne de positions (129) de l'échelle (17).

7. Dispositif électronique de mesure de précision de positions absolues selon la revendication 6, caractérisé en ce que la source de lumière (119) constitue une approximation d'une source de lumière de Lambert et s'étend au voisinage de la ligne de positions (129) de l'échelle (17) à une distance suffisante pour être toujours en place de manière à diriger la lumière à travers les deux fentes 19 au moins placées pour permettre la lecture par le dispositif à charges couplées (105).

8. Dispositif électronique de mesure de précision de positions absolues selon la revendication 2, caractérisé en ce que les moyens de mémoire sont constitués par un dispositif de mémoire morte (16) et en ce que les moyens de calcul sont constitués par un ordinateur (159).

9. Dispositif électronique de mesure de précision de positions absolues selon la revendication 8, caractérisé en ce qu'il comprend en outre un détecteur de température (163) destiné à détecter la température de l'échelle (17) et à transformer la température détectée en un signal électrique indiquant la température, et en ce que les moyens de calcul (159) compensent la dilatation thermique de l'échelle (17) en utilisant le signal électrique indiquant la température, lorsque ces moyens calculent la mesure de position précise le long de la ligne de positions (129) correspondant au segment (131, 133, 135, 137) situé au voisinage des moyens de lecture (105).

10. Dispositif électronique de mesure de précision de positions absolues selon la revendication 8, caractérisé en ce que la mémoire morte comprend un dispositif de mémoire morte programmable effaçable (161), de façon qu'on puisse remettre à zéro les indications de la mémoire pour corriger des changements dans les positions représentées par les indications de la mémoire.

11. Dispositif électronique de mesure de précision de positions absolues selon la revendication 7, caractérisé en ce que les moyens de calcul comprennent un dispositif de calcul du milieu de l'intensité de la lumière dirigée à travers les fentes (19) vers le dispositif à charges couplées (105).

12. Dispositif électronique de mesure de précision de positions absolues selon la revendication 11, caractérisé en ce que la source de lumière (119) est placée à moins de 1,27 mm (0,050 pouce) de la barre (17).

13. Dispositif électronique de mesure de précision de positions absolues selon la revendication 12, caractérisé en ce que le dispositif à charges couplées (105) est placé à moins de 1,27 mm (0,050 pouce) de la barre (17).

14. Dispositif électronique de mesure de précision de positions absolues selon la revendication 13, caractérisé en ce que le dispositif à charges couplées (105) présente une résolution d'au moins 19,7 pixels par mm (500 pixels par pouce), une plage de dynamique d'au moins 500 à 1, et une vitesse de lecture de moins de 2 millisecondes.

15. Dispositif électronique de mesure de précision de positions absolues selon la revendication 1, caractérisé en ce que l'échelle (17) ne comporte que deux graduations (19) lisibles par la machine, ces graduations étant fixées sur l'échelle pour chacun des segments (131, 133, 135, 137).

16. Dispositif électronique de mesure de précision de positions absolues selon la revendication 15, caractérisé en ce que l'échelle (17) est constituée par un élément métallique et en ce que les fentes constituant les graduations (19) traversent cet élément métallique.

17. Dispositif électronique de mesure de précision de positions absolues selon la revendication 16, caractérisé en ce que chacun des segments (131, 133, 135, 137) est séparé et en ce que les segments ne se recouvrent pas.

18. Dispositif électronique de mesure de précision de positions absolues selon la revendication 17, caractérisé en ce que les fentes (19) présentent chacune une largeur se situant dans la plage d'environ 0,127 mm à 2,54 mm (0,005 pouce à 0,1 pouce).

19. Dispositif électronique de mesure de précision de positions absolues selon la revendication 18, caractérisé en ce que les deux fentes (19) de chacun des segments (131, 133, 135, 137) sont espacées l'une de l'autre d'une distance unique se situant dans la plage d'environ 1,27 mm à 50,8 mm (0,05 pouce à environ 2,0 pouce).

20. Dispositif électronique de mesure de précision de positions absolues selon la revendication 19, caractérisé en ce que les moyens de lecture de machine comprennent un dispositif à charges couplées (105) présentant une longueur suffisante pour couvrir toujours la lecture des deux fentes (19) du segment au moins unique, une résolution d'au moins 19,7 pixels par mm (500 pixels par pouce), une plage de dynamique d'au moins 500 à 1, et une vitesse de lecture de moins de 2 millisecondes.

21. Dispositif électronique de mesure de précision de position absolues selon la revendication 20, caractérisé en ce qu'il comprend en outre une source de lumière (119) montée de manière à se déplacer solidairement du dispositif à charges couplées (105) et disposé de manière à diriger la lumière à travers les fentes (19) vers le dispositif à charges couplées (105) ; la source de lumière (119) constituant une approximation d'une source de lumière de Lambert s'étendant le long de l'élément métallique (17) au voisinage de celui-ci et sur une longueur suffisante pour diriger toujours cette lumière de lecture à travers les deux fentes du segment au moins unique.

22. Procédé pour obtenir une information de position à partir d'une fente d'indication de position (19) formée dans une barre d'échelle (17), ce procédé consistant à :
diriger de la lumière à travers la fente (19) sur un dispositif à charges couplées à pixels multiples (105) de manière à éclairer plus d'un des pixels ; les pixels éclairés du dispositif à charges couplées produisant des signaux électriques proportionnels à l'intensité de l'éclairage ; et
utiliser au moins deux des signaux électriques produits pour former une information de position composée d'au moins deux éléments.
